# EUROPEAN PATENT APPLICATION

(11) **EP 1 814 297 A1**
(43) Date of publication of application: **01.08.2007**
(21) Application number: 07250370.9
(22) Date of filing: 30.01.2007
(51) Int. Cl.: H04M 11/04

(54) **Alarm system**

(30) Priority: 30.01.2006 GB 0601816
(71) Applicant: VPS Holdings Limited, Elstree Way Borehamwood Herts WD6 1RX (GB)
(72) Inventor: Chambron, Michel, 93270 Sevran (FR); Labaune, Pascal, 21400 Puits (FR)
(74) Representative: Kirkham, Nicholas Andrew

(57) **Abstract**

The present invention relates to a monitored alarm system that has an alarm unit and a remote monitoring station. The alarm unit is arranged to contact the monitoring station via a telephone call when an alarm event or other circumstances occur. The monitoring station is arranged to leave said telephone call unanswered whilst logging the telephone number of the alarm unit which has telephoned so that the alarm unit can be identified.

## Description

The present invention relates to a monitored alarm system. Monitored alarm systems are commonly used on commercial and residential property and a monitoring station monitors the status or a number of alarmed properties and may issue alerts to security or police services when an alarm is activated.

Monitored alarm systems are well known. The present invention has been particularly designed for circumstances where the monitored alarm is only temporarily installed, but may be used in permanent installations as well. For example, the alarm may be used in properties that are unoccupied for a period of time.

The present invention seeks to provide a monitored alarm system allowing reduced operational costs. According to the present invention there is provided a monitored alarm system comprising an alarm unit and a remote monitoring station, the alarm unit being arranged to contact the monitoring station via a telephone call in a predetermined instance, wherein the monitoring station is arranged to leave said telephone call unanswered whilst logging identification details thereof. In this way the cost of calls between the alarm unit and the monitoring station are avoided as the call is not answered, but caller identification information is duly obtained identifying to the monitoring station the alarm that has been activated, as caller identification information is received prior to a telephone call being answered.

For portable or temporary installations, the alarm unit includes a mobile phone transmitter for contacting the monitoring station via a mobile phone network. This avoids the possibility that the telephone line is disrupted by accident or intentionally cut during unauthorised activities. The telephone network provider will normally provide at low cost a number of unique SIM cards at relatively low cost. Each SIM card can be used in an alarm unit and may be programmed to contact various different numbers depending upon the alarm status.

In most installations, the alarm unit is powered by an internal power supply, such as a battery and this avoids the unit being denied power during unauthorised activity.

The alarm unit is preferably provided such that the predetermined instance is selected from:
(a) the alarm unit being activated to alarm status;
(b) the alarm unit being armed;
(c) the alarm unit being disarmed;
(d) low battery and or interrupted power supply being detected;
(e) a test mode; and/or
(f) combinations of the above.

In such cases, the alarm unit is advantageously arranged to call a different telephone number for each of the instances (a) to (e). All of the numbers would connect to the monitoring station. In this way the monitoring station is able to keep a log of the status and changes thereto of the alarm unit. When contacted on certain numbers, e.g. alarm activation, the monitoring unit may immediately contact a security or police service to inspect the property that is alarmed.

In order to avoid a notification reaching the monitoring system, the monitoring system can have secondary numbers which an alarm will use if the normal (primary) number is unavailable, for instance, it is engaged. The alarm unit is then arranged to call the backup telephone number if the normal telephone number is unavailable.

It will be appreciated that in most instances the alarm system will include a plurality of alarm units in contact with the monitoring station, maybe many hundreds or thousands. Each alarm unit will be unique in the telephone number or other caller ID associated therewith and so uniquely identifiable to the monitoring station.

In a particularly preferred embodiment, the alarm unit is fitted to a door, such as a removable security door. In such circumstances, the door may be unlockable remotely by the monitoring station. This can be particularly useful in such circumstances as a person requiring entry to a property for maintenance or other reasons does not need to be given the unlock code for any particular unit. The person is simply given a contact code, which will be recognised by the alarm unit to contact the monitoring station. The monitoring station will have otherwise have been informed of the likely entry and can even double check with the person directly, for example via a telephone call to the person after the unlock code is input. If the entry is authorised, the monitoring station can unlock the door. This is of particular use when there are a number of different people who require entry into the various properties being monitored, as individual unlock codes do not have to be provided. Also, if unauthorised entry is attempted by someone knowing a contact code, the monitoring station will know that entry is not in that case permitted (due to time or place) and refuse to unlock the door.

The invention will now be described with reference to the accompanying drawings, in which:
- Figure 1: illustrates a preferred embodiment of the present invention;
- Figure 2: illustrates a detail of the monitoring station of the present invention;
- Figure 3: illustrates a detail of the monitoring station of the present invention;
- Figure 4: illustrates a detail of the monitoring station of the present invention;
- Figure 5: illustrates a detail of monitoring station according to the present invention;
- Figure 6: illustrates a detail of the monitoring station of the present invention;
- Figure 7: schematically illustrates the layout of hardware components of a monitoring station according to the present invention;
- Figure 8: illustrates a detail of the monitoring station of the present invention;
- Figure 9: illustrates a detail of the monitoring station of the present invention;
- Figure 10: illustrates an alarm unit according to the present invention; and

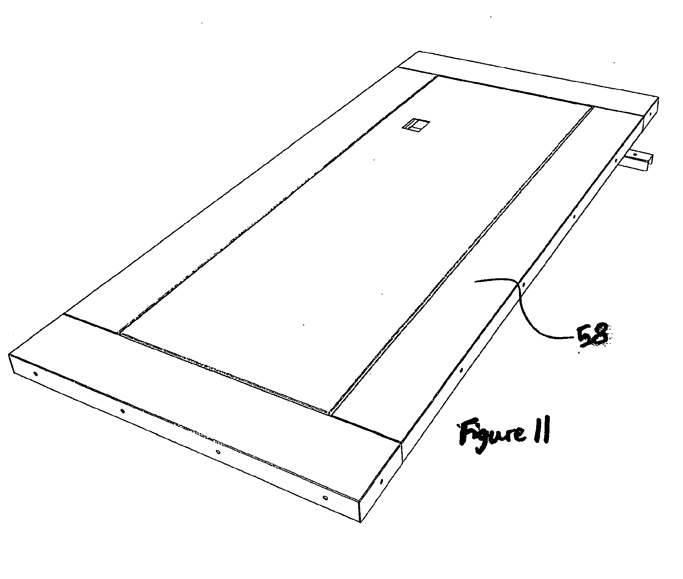

- Figure 11: illustrates a portable security door to which the alarm unit of Figure 10 can be fitted.

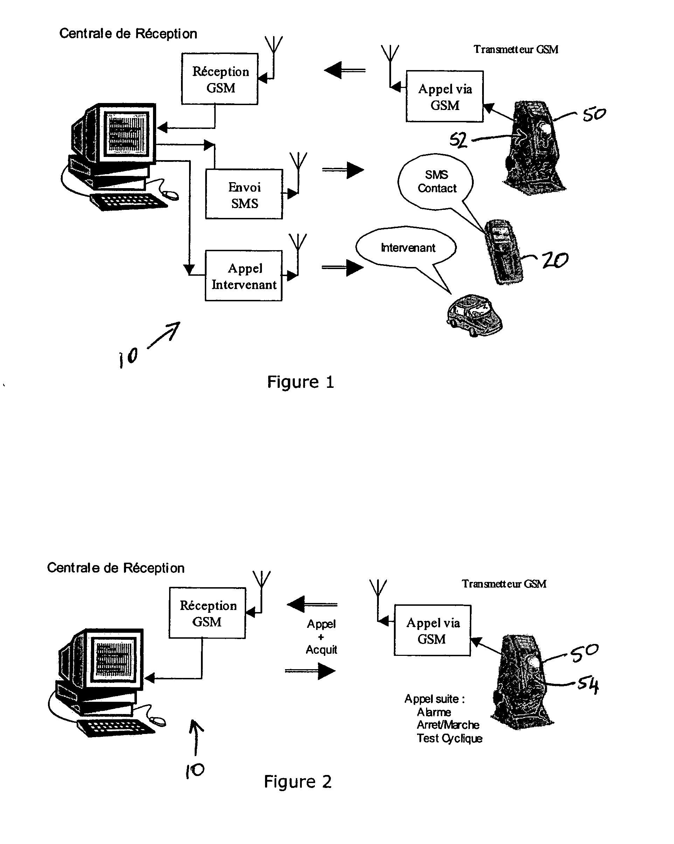

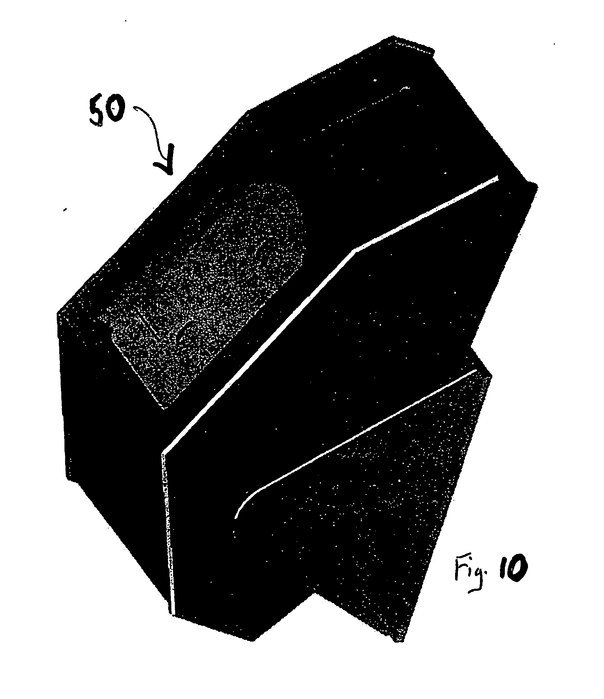

Figures 1 to 9 show an embodiment of a monitoring system according to the present invention. The same number is used in the different Figures to illustrate a similar part. All types of telephone network now provide basic caller identification, such a telephone number when a call is directed to its recipient. This information is provided before the call is actually answered. Thus for the basic operation of the invention, the alarm unit 50 (e.g. as shown in Figure 10) can contact a monitoring station 10 via GSM modems, ISDN terminal adapters or modems on a PSTN telephone line. The monitoring station 10 is also known as a Remote Management and Control Station (10). It is preferred to use a GSM or other mobile connection for a variety of reasons. Firstly, this allows the alarm unit 50 to be easily portable in temporary or non-fixed (e.g. vehicles, boats, statues) installations. Also, the basic SIM cards used in such mobile networks allows for a variety of numbers to be stored for dialling and so allows facilitates simple implementation of the invention. It is also much more difficult to put an alarm out of communication with the monitoring station when there are no fixed phone lines.

The entirety of the communications of this system illustrated in Figure 1 use GSM network. The alarm unit 50 includes a tranmitter 52 that is arranged to generate calls in "DATA" mode towards the monitoring station 10, and the monitoring station 10 is arranged to send SMS towards the e.g. an individual using GSM phone 20, or sends a request for a third party, such as a security company, to attend the premises that house the particular alarm unit 50. Of course, the system will actually incorporate a large number of alarm units 50 which may all be the same of different, but the monitoring station 10 will contain the information on each alarm unit 50.

Figure 2 illustrates a transmitter 52 calling the monitoring station 10 via a GSM network. The alarm unit 50 is entirely self-sufficient; it incorporates a GSM modem (not shown separately) enabling the transmitter 52 to communicate autonomously with the monitoring station 10. The transmitter 52 is powered by a battery that preferably has one to five years autonomy depending on the utilization ratio. It is connected to the GSM network only during the time of the communications with the monitoring system 10. The transmitter 52, for reasons of energy saving, is maintained in "sleeping" mode whilst not in use. It switches to "connected" mode in three cases: (1) the detection of human presence, for example by means of an incorporated Infra-red detector 52; (2) the transmitter 52 is switched "on" or "off" by an associated keyboard at the transmitter location; or (3) a test call done periodically. The transmitter 52 will call a different telephone number for each different instance.

The transmitter 52 repeats each call towards the monitoring station 10 three times until reception is acknowledged. In the case of non-reception, three calls are sent towards the overflow station with the same principle of acknowledgement. The call from the transmitter 52 is not answered, but details of the transmitter are logged with the monitoring station 10. The acknowledgement from comes via a call back from the monitoring station 10. Thus the calls from the transmitter 52 are never answered greatly improving the cost efficiency of system.

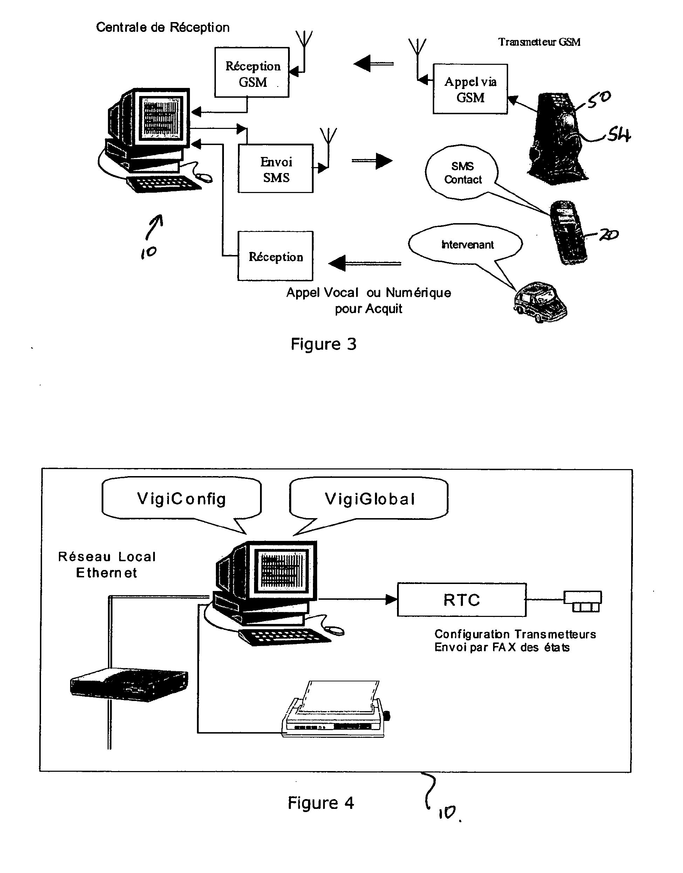

At the reception of an alarm, or other call from the transmitter 52, e.g. an alarm following detection of a presence by the infra-red detector 54, the monitoring station 10 will send a SMS message to the contact or a request for control, according to the instructions registered in the associate instructions contained for each alarm unit 50. This is illustrated in Figure 3. At reception of a SMS or a request for control, the personel must call the center back to carry out an acknoledgement, in order to stop the sequence of investigation. Of course the monitoring station 10 could be programmed in other ways, such as automatically sending a voice message to a security service or initiating police contact.

In order to confirm correct transmitter operation the transmitter 52 is programmed to periodically contact the monitoring station 10 in the case of no event occurred in e.g. ten days. The transmitter 52 carries out the periodic test call towards the monitoring station 10 on a different number to the number used for alarm warning. This allows the confirmation of the correct operation of the transmitter 52 again by the call to the monitoring station 10 being logged but not answered. Of course, the monitoring station 10 contains a database letting the system know which transmitter 52 should be calling and if a call is missed initiates an alarm for the alarm unit 50 that has failed to call.

Further, each alarm unit 50 checks automatically its battery level, in the event of weak battery, the transmitter 52 informs the monitoring station 10, again by call to monitoring station 10 at a different number. If the battery level is reported to be low, the monitoring station 10 is programmed to send a message to maintenance personnel to replace the battery at the particular transmitter 50.

In order to confirm correct operation of the monitoring station 10, periodically, e.g. each hour, a selected test transmitter calls the monitoring station 10 and awaits the acknowledgement of correct operation of the system. In the event of a defect, the selected test transmitter sends a message, e.g. SMS, to an "on duty" agent to signal the non-function of the monitoring station 10.

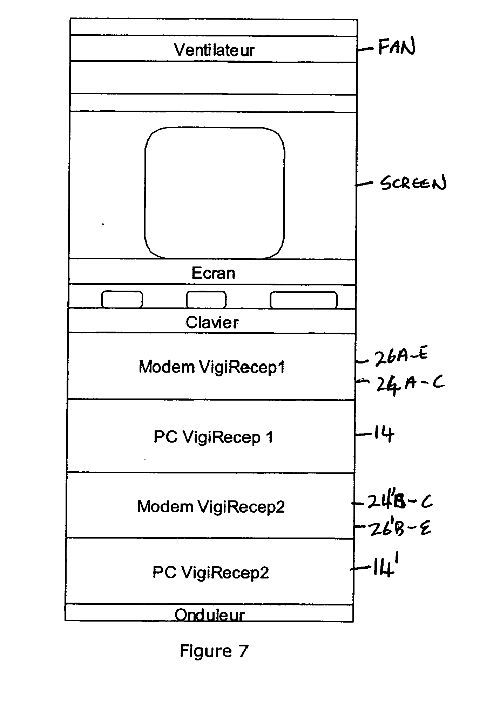

Each transmitter is always maintained in "sleeping" mode, and so the transmitter cannot answer calls sent from the monitoring station 10. However, it is possible "to awake it" with the help of the keyboard 56 and to obtain a connection to the GSM network. Alternatively or additionally, if the alarm unit 50 is fixed to a door 58 (Figure 7) or the like, the keyboard can be provided on the door panel. Once awake, for two minutes, it awaits for a call from the monitoring station 10. It is possible then, to transmit it its configuration or to erase its secret code or to read the events stored in its memory.

The monitoring station 10 contains two main operational software packages, known as VIGIGLOBAL and VIGICONFIG, which are each independent of each other as illustrated in Figure 4.

The software "VIGIGLOBAL" allows the follow-up of alarms, the reports of intervention and the states of the fleet of alarm units 50 of the customers.

The software "VIGICONFIG" allows the local or distant configuration of the alarm units 50. It manages also the periodical tests to supervise the correct operation of the transmitters 52. Of course this latter software is independent of the hardware and other software. It is not required for basic operation of the invention, but does permit preferred performance and may be used in relation to control of a wide range of remote devices.

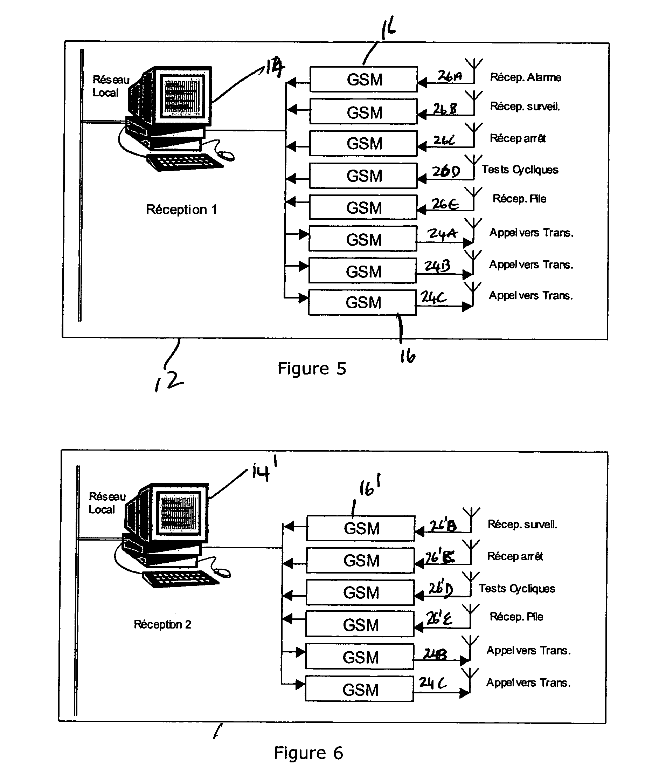

The basic unit of the monitoring station 10 is shown in Figure 5 as reception 12. Reception 12 is made of a personal computer (PC) 14 and a frame of 8 GSM modems 16. The reception 12 is designed to receive calls from about 2000 transmitters 52. Each call is confirmed using three GSM lines "CALL TOWARDS TRANS". Each transmitter 50 repeats its calls three times in the event of non-reception of the acknowledgment, i.e. the call back from the reception 12.

Reception 12 has five input lines 26A - 26E each with a different telephone number and three output lines 24A - 24C. Line 26A receives the alarm signals. Line 26B receives calls that an alarm unit 10 is armed (i.e. set for surveillance) and line 26C receives calls on disarming of an alarm unit 10. Line 22D receives calls that each alarm unit 10 periodically is set to make to ensure that the alarm unit 10 is functioning correctly. Line 26E receives calls when an alarm unit 10 has a low battery or an interrupted power supply. The computer 22 will be set to log all of these calls, though of course none of the incoming calls will be answered. It will further be set to transmit information about the change in status of each alarm unit 10 that is being monitored via one or more of the three output lines 24A, 24B and 24C. Normally all alarm notifications will be immediately further relayed as with monitoring station 20A. For example, the owners of the properties being monitored may wish to receive an SMS message each time a door is disarmed or when a low battery is detected.

Figure 6 shows reception 20 or the "overflow" monitoring unit. The reception 20 is again made of a PC 14' and a frame of 6 GSM modems 16', receives the overflow calls of reception 12. It does not receive the alarm calls because the overflow of the line "ALARM" is carried out by the back-up monitoring station explained in more detail below.

Physically, the computers 14 and 14' and other hardware of reception 12 and reception 20 are installed in the same 19 inches high bay as shown in Figure 7.

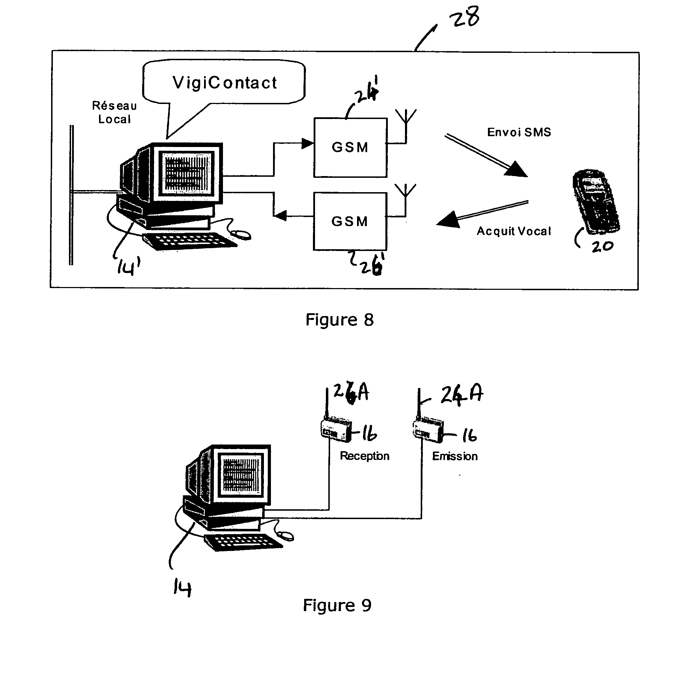

The calling server 28 is shown in Figure 8. This calling server 28 is used to define the actions to be carried out upon reception of an alarm. It contains a PC 30 with a database of the addresses where VIGICONTACT software modules are installed as well as the various procedures of calling the different contacts. It allows the option of calling manually or automatically, the follow-up of the calls are registered and stored in separate database.

The back-up server 30 is shown in Figure 9. This backup server receives the overflow alarm calls from reception 12, i.e alarm calls from transmitters 52 for which no acknowledgement was received in the three attempts. This back-up server 32 is a totally separate system monitoring system 10 and is normally located at a physically distinct location because it should not use the same GSM relay as the other lines in case of breakdown of the normal GSM relay used by the principal lines to reception 12 and reception 20.

The back-up server 32 uses two GSM modems 34 on two lines 36, 38. One 36 line is used for reception of calls from transmitters 52 (alarm calls only) and the other line38 for the acknowledgment of alarms and the sending of SMS messages. The line used for receipt of calls also receives update information from the database of the principal server of reception 12, which is also stored on the back-up server 32.

Figure 10 shows a typical alarm unit 50, which can be fitted to a temporary or permanent structure such as a door 58 (shown in Figure 7). The alarm unit 10 shown may have a strong plastic or metal case. If made from plastic the unit will weigh about 1.5kg and when made from metal will weigh about 4.0kg. Inside the case, not shown, the alarm circuitry and GSM transmitter 52 will be located. The system is powered by a long duration Lithium cell which is designed to hold a charge for at least five years but can output the charge at relatively high levels. The alarm unit 50 will be programmed to contact the monitoring station 10 when unauthorised entry is attempted or affected on the door 12. The alarm unit 50 will also contact the monitoring station when the alarm is armed (door 58 closed and locked), disarmed (door 58 opened by authorised entry, e.g. with appropriate code), when the alarm unit 50 has a low battery and periodically (e.g. every 10 days) to show the monitoring unit that the particular alarm unit 10 is functioning.

The door 58 may be provided with electronic and/or key operated locks. The electronic locks will normally be operated through a keypad where the correct code needs to be entered to open the lock. However, the alarm unit 50 may also be programmed to operate an electronic lock on the door. In this way, where there a several doors in operation and, for example, several engineers or other outside contractors need access to various properties over time, there is a security risk in allowing all of these people have door entry codes. The present invention can reduce the security risk, by the contractors each being given an alarm contact code. The alarm code is input into the alarm unit via the normal door 58 keypad. The alarm unit 50 contacts the monitoring station 10. At the monitoring station 10, details are kept of properties the contractors are meant accessing at any time. Often, the contractor will also have to contact the monitoring station separately by telephone to verify this information. If cleared, the alarm unit 50 can be used to unlock the door 58.

The alarm units 50 may be standalone units or may be permanently mounted on a door 58 or other structure. The alarm units 50 may detect an alarm state by means of infra red sensors, incorrect codes being entered on an entry panel, breaking of an electrical or visual circuit or any other means as is common or known in the field of alarms. The size and appearance of the alarm unit 50 will vary depending upon what types of alarm states are being monitored.

Although the alarm unit 50 is particularly suited for installation on temporary security doors, it can also be used in a wide range of other places. It could be fitted to boats, cars or other vehicles. It could be included as part of a permanent building alarm or even as part of an item such as a statue.

## Claims

1. A monitored alarm system comprising an alarm unit and a remote monitoring station, the alarm unit being arranged to contact the monitoring station via a telephone call in a predetermined instance, wherein the monitoring station is arranged to leave said telephone call unanswered whilst logging identification details thereof.

2. The alarm system according to claim 1, wherein the alarm unit includes a mobile phone transmitter for contacting the monitoring station via a mobile phone network.

3. The alarm system according to claim 1 or claim 2, wherein the alarm unit is powered by an internal power supply.

4. The alarm system according to any one of the preceding claims, wherein the predetermined instance is selected from:
(a) the alarm unit being activated to alarm status;
(b) the alarm unit being armed;
(c) the alarm unit being disarmed;
(d) low battery and or interrupted power supply being detected;
(e) a test mode; and/or
(g) combinations of the above.

5. The alarm system according to claim 4, wherein the alarm unit is arranged to call a different telephone number for each of the instances (a) to (e).

6. The alarm system according to any one of the preceding claims, wherein the alarm system is arranged to call a backup telephone number if the normal telephone number is unavailable.

7. The alarm system according to any one of the preceding claims, wherein there are a plurality of alarm units in contact with the monitoring station.

8. The alarm system according to any one of the preceding claims, wherein the alarm unit is fitted to a door.

9. The alarm system according to claim 8, wherein the door is a removable security door.

10. The alarm system according to claim 8 or claim 9, wherein the door is remotely unlockable from the monitoring station.
